# EUROPÄISCHE PATENTANMELDUNG

(11) **EP 4 075 266 A1**
(43) Veröffentlichungstag der Anmeldung: **19.10.2022**
(21) Anmeldenummer: 21167823.0
(22) Anmeldetag: 12.04.2021
(51) Int. Cl.: G06F 8/61, G06F 9/4401

(54) **VERFAHREN, COMPUTERPROGRAMM UND VORRICHTUNG ZUM DURCHFÜHREN EINES BOOTVORGANGS EINES SYSTEMS**

(71) Anmelder: Elektrobit Automotive GmbH, 91058 Erlangen (DE)
(72) Erfinder: Hildebrand, Uwe - c/o Continental Teves AG & Co. OHG, 60488 Frankfurt am Main (DE)
(74) Vertreter: Continental Corporation

(57) **Zusammenfassung**

Die vorliegende Erfindung betrifft ein Verfahren, ein Computerprogramm mit Instruktionen und eine Vorrichtung zum Durchführen eines Bootvorgangs eines Systems, das redundante Kopien von Boot-Images unterstützt. In einem ersten Schritt wird eine aktive Kopie der Boot-Images bestimmt (S1). Anschließend wird die aktive Kopie der Boot-Images verarbeitet (S2). Im Ansprechen auf einen erfolgreichen Bootvorgang wird dann eine andere Kopie der Boot-Images als aktive Kopie für einen nachfolgenden Bootvorgang gesetzt (S3).

## Beschreibung

Die vorliegende Erfindung betrifft ein Verfahren, ein Computerprogramm mit Instruktionen und eine Vorrichtung zum Durchführen eines Bootvorgangs eines Systems, das redundante Kopien von Boot-Images unterstützt.

Unter einem Start- oder Bootvorgang, auch als Booten bezeichnet, versteht man das Laden eines Betriebssystems eines Computersystems, wie es üblicherweise nach dem Einschalten erforderlich ist. Beim Start des Systems werden Inhalte eines Boot-Images, auch als Startabbild bezeichnet, entpackt und geladen. Die geladenen Inhalte initialisieren alle weiteren Schritte, die schließlich zum Start des eigentlichen Betriebssystems führen.

Eine zunehmende Anzahl von Systemen unterstützt die Verwendung redundanter Boot-Images. Bei redundanten Boot-Images werden in der Regel zwei Kopien eines Boot-Images auf zwei Partitionen abgelegt, einer A-Partition und einer B-Partition. Mittels eines globalen Flags wird eine der Partitionen als aktive Partition festgelegt. Beim Bootvorgang wird dann auf das auf dieser Partition abgelegte Boot-Image zugegriffen. Die andere Partition wird oftmals als inaktive Partition oder auch als Spiegelpartition bezeichnet.

Für eine Umsetzung des beschriebenen Ansatzes werden nicht notwendigerweise zwei eigenständige Partitionen benötigt. De facto geht es im Wesentlichen darum, dass jeweils mindestens zwei Kopien eines Boot-Images vorhanden sind. Diese beiden Kopien eines Boot-Images können durchaus in der gleichen Partition liegen.

Die Verwendung redundanter Kopien von Boot-Images ist ein nützlicher Ansatz, um Updates im Hintergrund durchzuführen und mit dem nächsten Neustart zu aktivieren. Während das System mit einer aktiven Kopie eines Boot-Images läuft, wird die andere, nicht aktive Kopie des Boot-Images aktualisiert. Nach dem Update wird die aktualisierte Kopie des Boot-Images mittels des globalen Flags als aktive Kopie festgelegt. Bei einem anschließenden Neustart wird das System mit der aktualisierten Kopie des Boot-Images gestartet. Entsprechend kann verfahren werden, wenn zwei oder mehr Boot-Images in einer mehrstufigen Boot-Sequenz verwendet werden.

Ein Vorteil einer solchen Implementierung besteht darin, dass eine beschädigte aktive Kopie eines Boot-Images während der Ausführung der Boot-Sequenz implizit erkannt wird, z.B. durch eine Signaturprüfung. Es kann dann eine Reparatur ausgelöst werden. Die Erkennung einer beschädigten nicht-aktiven Kopie des Boot-Images erfordert jedoch eine explizite Überprüfung, da die nicht-aktiven Kopien im fehlerfreien Fall während eines Boot-Vorgangs nicht benötigt werden.

In diesem Zusammenhang beschreibt US 2013/0047031 A1 ein Verfahren zum Wiederherstellen eines Boot-Images von einem sicheren Ort. Hardware-Befehle initiieren eine Sequenz von Boot-Zyklen, um ein Computerbetriebssystem zu starten. Während der Boot-Zyklen werden mehrere Stufen des Boot-Codes verifiziert und es wird für jede Stufe bestimmt, ob die Stufe vom Gerät verwendet werden kann. Wenn eine Stufe des Boot-Codes als unbrauchbar eingestuft wird, wird eine sichere Kopie des Boot-Codes von einem sicheren schreibgeschützten Speicherort geladen, um den unbrauchbaren Code zu reparieren und das Computerbetriebssystem zu starten.

Es ist Aufgabe der vorliegenden Erfindung, verbesserte Lösungen für das Durchführen eines Bootvorgangs eines Systems bereitzustellen.

Diese Aufgabe wird durch ein Verfahren mit den Merkmalen des Anspruchs 1, durch ein Computerprogramm mit Instruktionen mit den Merkmalen des Anspruchs 9 und durch eine Vorrichtung mit den Merkmalen des Anspruchs 10 gelöst. Bevorzugte Ausgestaltungen der Erfindung sind Gegenstand der abhängigen Ansprüche.

Gemäß einem ersten Aspekt der Erfindung umfasst ein Verfahren zum Durchführen eines Bootvorgangs eines Systems, das redundante Kopien von Boot-Images unterstützt, die Schritte:
- Bestimmen einer aktiven Kopie der Boot-Images;
- Verarbeiten der aktiven Kopie der Boot-Images; und
- Setzen einer anderen Kopie der Boot-Images als aktive Kopie für einen nachfolgenden Bootvorgang im Ansprechen auf einen erfolgreichen Bootvorgang.

Gemäß einem weiteren Aspekt der Erfindung umfasst ein Computerprogramm Instruktionen, die bei Ausführung durch einen Computer den Computer zur Ausführung der folgenden Schritte zum Durchführen eines Bootvorgangs eines Systems veranlassen, das redundante Kopien von Boot-Images unterstützt:
- Bestimmen einer aktiven Kopie der Boot-Images;
- Verarbeiten der aktiven Kopie der Boot-Images; und
- Setzen einer anderen Kopie der Boot-Images als aktive Kopie für einen nachfolgenden Bootvorgang im Ansprechen auf einen erfolgreichen Bootvorgang.

Der Begriff Computer ist dabei breit zu verstehen. Insbesondere umfasst er auch Steuergeräte, eingebettete Systeme und andere prozessorbasierte Datenverarbeitungsvorrichtungen.

Das Computerprogramm kann beispielsweise für einen elektronischen Abruf bereitgestellt werden oder auf einem computerlesbaren Speichermedium gespeichert sein.

Gemäß einem weiteren Aspekt der Erfindung weist eine Vorrichtung zum Durchführen eines Bootvorgangs eines Systems, das redundante Kopien von Boot-Images unterstützt, auf:
- eine Auswerteeinheit zum Bestimmen einer aktiven Kopie der Boot-Images; und
- eine Verarbeitungseinheit zum Verarbeiten der aktiven Kopie der Boot-Images und zum Setzen einer anderen Kopie der Boot-Images als aktive Kopie für einen nachfolgenden Bootvorgang im Ansprechen auf einen erfolgreichen Bootvorgang.

Bei der erfindungsgemäßen Lösung wird nach jedem Bootvorgang, oder zumindest nach einer definierten Anzahl von Bootvorgängen, eine andere Kopie eines Boot-Images als aktive Kopie für den nächsten Bootvorgang gesetzt. Somit werden implizit alle Kopien der Boot-Images regelmäßig überprüft. Die erfindungsgemäße Lösung benötigt dabei keine besondere Implementierung und keine zusätzliche Hardware. Sie hat zudem keine Auswirkungen auf die Performanz eines Prozessors des Systems zur Laufzeit.

Gemäß einem Aspekt der Erfindung wird die aktive Kopie der Boot-Images mittels zumindest eines Flags angezeigt. Die Verwendung von Flags stellt eine einfache Möglichkeit dar, für einen anstehenden Bootvorgang zu vermitteln, welche Kopie der Boot-Images die aktive Kopie ist und verarbeitet werden soll.

Gemäß einem Aspekt der Erfindung ist das zumindest eine Flag in einem Speicher des Systems gespeichert oder wird von einer externen Einheit bereitgestellt. Die Speicherung im System hat den Vorteil, dass der Bootvorgang völlig autark ohne externe Vorgaben ausgeführt werden kann. Die Bereitstellung von Flags durch eine externe Einheit erlaubt es hingegen einer übergeordneten Kontrollinstanz, den Bootvorgang zu beeinflussen.

Gemäß einem Aspekt der Erfindung ist das zumindest eine Flag für einzelne Stufen einer Boot-Sequenz oder global für die Boot-Sequenz gesetzt. In der Regel wird bei einer Boot-Sequenz ein globales Flag gesetzt, dass dann für alle Stufen der Boot-Sequenz gilt. Es ist aber ebenso möglich, dedizierte Flags für einzelne oder sogar alle Stufen zu verwenden.

Gemäß einem Aspekt der Erfindung wird im Ansprechen auf das Feststellen einer Beschädigung einer aktiven Kopie eines Boot-Images eine entsprechende redundante Kopie des betroffenen Boot-Images verarbeitet. Auf diese Weise ist sichergestellt, dass der Bootvorgang trotz einer Beschädigung eines Boot-Images erfolgreich zu Ende gebracht werden kann.

Gemäß einem Aspekt der Erfindung wird nach dem Verarbeiten der redundanten Kopie des Boot-Images die beschädigte aktive Kopie des Boot-Images repariert. Auf diese Weise können spätere Bootvorgänge wieder unter Zugriff auf die dann reparierte Kopie des Boot-Images erfolgen. Zudem steht so wieder eine unbeschädigte Kopie zur Verfügung, falls es zu einer Beschädigung der redundanten Kopie kommen sollte.

Gemäß einem Aspekt der Erfindung sind nur für einzelne Stufen einer Boot-Sequenz redundante Kopien der Boot-Images verfügbar. Auch für Systeme, die nicht für jede Stufe einer Boot-Sequenz redundante Boot-Images vorsehen, kann die erfindungsgemäße Lösung genutzt werden. In diesem Fall wird für die Stufen ohne Redundanz einfach immer die eine verfügbare Kopie eines Boot-Images in der Boot-Sequenz verwendet, unabhängig davon, welche Boot-Images ansonsten als aktiv gekennzeichnet sind. Ein beschädigtes nicht-redundantes Boot-Image wird dann allerdings in jedem Bootvorgang erkannt und muss durch geeignete Mechanismen repariert werden.

Gemäß einem Aspekt der Erfindung wird das Verfahren im Ansprechen auf einen Aktualisierungsvorgang einer ladbaren Software-Komponente oder einer ladbaren Firmware-Komponente bis zu einem erfolgreichen Abschluss des Aktualisierungsvorgangs ausgesetzt. Im Falle eines Aktualisierungsvorgangs obliegt die Kennzeichnung der aktiven Kopie eines Boot-Images alleine einer Kontrollanwendung für den Aktualisierungsvorgang. Dies verhindert, dass sich die beiden Vorgänge gegenseitig behindern.

Vorzugsweise wird ein erfindungsgemäßes Verfahren oder eine erfindungsgemäße Vorrichtung in einem Fortbewegungsmittel eingesetzt, z.B. in einem Kraftfahrzeug. Bei dem Fortbewegungsmittel kann es sich aber auch um ein bemanntes oder unbemanntes Fluggerät handeln, z.B. eine Drohne oder ein Flugtaxi, etc. Grundsätzlich ist die Verwendung der erfindungsgemäßen Lösung aber vorteilhaft für alle (eingebetteten) Systeme, die redundante Kopien von Boot-Images unterstützen.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch ein Verfahren zum Durchführen eines Bootvorgangs eines Systems;
- Fig. 2: zeigt schematisch eine erste Ausführungsform einer Vorrichtung zum Durchführen eines Bootvorgangs eines Systems;
- Fig. 3: zeigt schematisch eine zweite Ausführungsform einer Vorrichtung zum Durchführen eines Bootvorgangs eines Systems;
- Fig. 4: zeigt schematisch ein Fortbewegungsmittel, in dem eine erfindungsgemäße Lösung realisiert ist;
- Fig. 5: zeigt schematisch eine mehrstufige Boot-Sequenz gemäß dem Stand der Technik, wenn kein beschädigtes Boot-Image vorliegt;
- Fig. 6: zeigt schematisch eine mehrstufige Boot-Sequenz gemäß dem Stand der Technik, wenn ein beschädigtes Boot-Image vorliegt;
- Fig. 7: zeigt schematisch eine mehrstufige Boot-Sequenz gemäß der Erfindung, wenn kein beschädigtes Boot-Image vorliegt; und
- Fig. 8: zeigt schematisch eine mehrstufige Boot-Sequenz gemäß der Erfindung nach einem Wechsel der aktiven Kopie der Boot-Images, wenn ein beschädigtes Boot-Image vorliegt.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

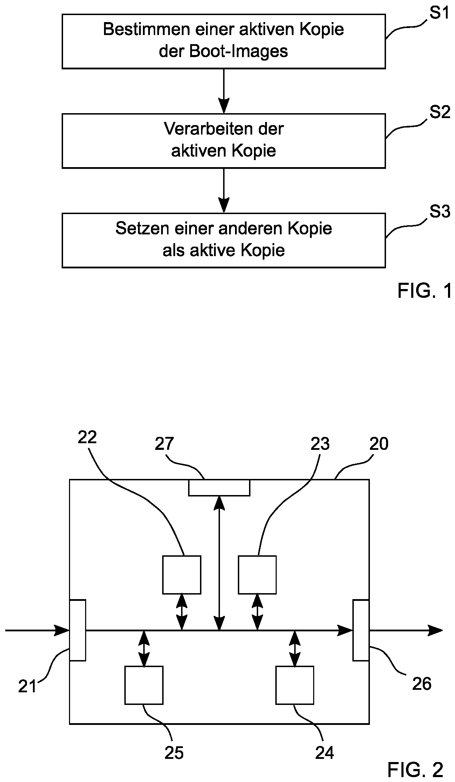

Fig. 1 zeigt schematisch ein Verfahren zum Durchführen eines Bootvorgangs eines Systems, das redundante Kopien von Boot-Images unterstützt. Dabei können für alle Stufen oder nur für einzelne Stufen einer Boot-Sequenz redundante Kopien der Boot-Images verfügbar sein. In einem ersten Schritt wird eine aktive Kopie der Boot-Images bestimmt S1. Diese kann beispielsweise mittels zumindest eines Flags angezeigt werden. Das zumindest eine Flag kann z.B. in einem Speicher des Systems gespeichert sein oder von einer externen Einheit bereitgestellt werden und für einzelne Stufen der Boot-Sequenz oder global für die Boot-Sequenz gesetzt sein. Anschließend wird die aktive Kopie der Boot-Images verarbeitet S2. Im Ansprechen auf einen erfolgreichen Bootvorgang wird dann eine andere Kopie der Boot-Images als aktive Kopie für einen nachfolgenden Bootvorgang gesetzt S3. Wird während des Bootvorgangs eine Beschädigung einer aktiven Kopie eines Boot-Images festgestellt, so wird vorzugsweise eine entsprechende redundante Kopie des betroffenen Boot-Images verarbeitet. Nach dem Verarbeiten der redundanten Kopie kann dann die beschädigte aktive Kopie des Boot-Images repariert werden. Im Ansprechen auf einen Aktualisierungsvorgang einer ladbaren Software-Komponente oder einer ladbaren Firmware-Komponente wird das Verfahren bevorzugt bis zu einem erfolgreichen Abschluss des Aktualisierungsvorgangs ausgesetzt.

Fig. 2 zeigt eine vereinfachte schematische Darstellung einer ersten Ausführungsform einer Vorrichtung 20 zum Durchführen eines Bootvorgangs eines Systems, das redundante Kopien von Boot-Images unterstützt. Dabei können für alle Stufen oder nur für einzelne Stufen einer Boot-Sequenz redundante Kopien der Boot-Images verfügbar sein. Die Vorrichtung 20 hat einen Eingang 21, über den beispielsweise aktualisierte Software-Komponenten oder Firmware-Komponenten oder von einer externen Einheit bereitgestellte Daten empfangen werden können. Eine Auswerteeinheit 22 ist dazu eingerichtet, eine aktive Kopie der Boot-Images zu bestimmen. Diese kann beispielsweise mittels zumindest eines Flags angezeigt werden. Das zumindest eine Flag kann z.B. in einem Speicher des Systems gespeichert sein oder von einer externen Einheit bereitgestellt werden und für einzelne Stufen der Boot-Sequenz oder global für die Boot-Sequenz gesetzt sein. Eine Verarbeitungseinheit 23 ist dazu eingerichtet, die aktive Kopie der Boot-Images zu verarbeiten. Dies beinhaltet üblicherweise eine Überprüfung des Boot-Images der jeweils nächsten Stufe der Boot-Sequenz, z.B. mittels Signaturprüfung, um dessen Validität zu ermitteln. Die Verarbeitungseinheit 23 ist zudem dazu eingerichtet, im Ansprechen auf einen erfolgreichen Bootvorgang eine andere Kopie der Boot-Images als aktive Kopie für einen nachfolgenden Bootvorgang zu setzen. Im Falle von extern bereitgestellten Boot-Flag(s) würde dies auch durch eine übergeordnete externe Kontrollinstanz erfolgen. Über einen Ausgang 26 der Vorrichtung 20 können Daten zur weiteren Verwendung ausgegeben werden. Wird während des Bootvorgangs von der Verarbeitungseinheit 23 eine Beschädigung einer aktiven Kopie eines Boot-Images festgestellt, so wird vorzugsweise eine entsprechende redundante Kopie des betroffenen Boot-Images verarbeitet. Nach dem Verarbeiten der redundanten Kopie kann dann die beschädigte aktive Kopie des Boot-Images repariert werden. Im Ansprechen auf einen Aktualisierungsvorgang einer ladbaren Software-Komponente oder einer ladbaren Firmware-Komponente wird das Verfahren bevorzugt bis zu einem erfolgreichen Abschluss des Aktualisierungsvorgangs ausgesetzt.

Die Auswerteeinheit 22 und die Verarbeitungseinheit 23 können von einer Kontrolleinheit 24 gesteuert werden. Über eine Benutzerschnittstelle 27 können gegebenenfalls Einstellungen der Auswerteeinheit 22, der Verarbeitungseinheit 23 oder der Kontrolleinheit 24 geändert werden. Die in der Vorrichtung 20 anfallenden Daten können bei Bedarf in einem Speicher 25 der Vorrichtung 20 abgelegt werden, beispielsweise für eine spätere Auswertung oder für eine Nutzung durch die Komponenten der Vorrichtung 20. Die Auswerteeinheit 22, die Verarbeitungseinheit 23 sowie die Kontrolleinheit 24 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU oder einer CPU. Der Eingang 21 und der Ausgang 26 können als getrennte Schnittstellen oder als eine kombinierte Schnittstelle implementiert sein.

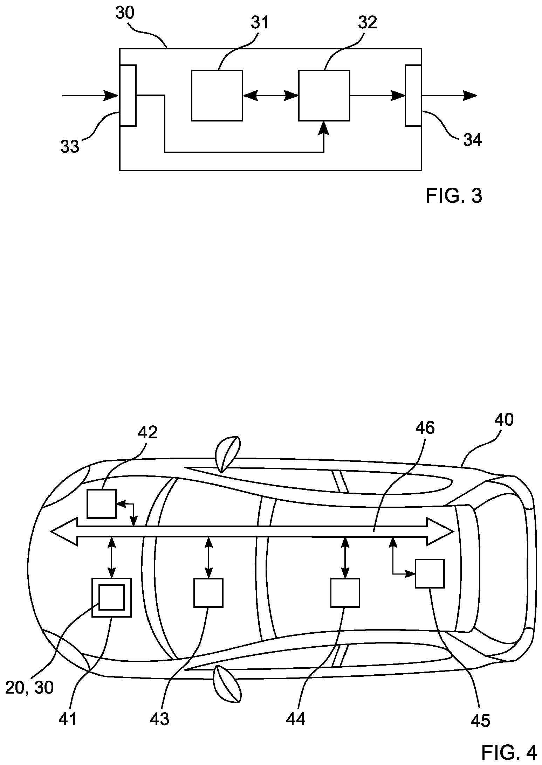

Fig. 3 zeigt eine vereinfachte schematische Darstellung einer zweiten Ausführungsform einer Vorrichtung 30 zum Durchführen eines Bootvorgangs eines Systems, das redundante Kopien von Boot-Images unterstützt. Die Vorrichtung 30 weist einen Prozessor 32 und einen Speicher 31 auf. Beispielsweise handelt es sich bei der Vorrichtung 30 um ein Steuergerät. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Informationen von einer Komponente eines Steuerungssystems. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 25, 31 der beschriebenen Vorrichtungen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

Fig. 4 zeigt schematisch ein Fortbewegungsmittel 40, in dem eine erfindungsgemäße Lösung realisiert ist. Bei dem Fortbewegungsmittel 40 handelt es sich in diesem Beispiel um ein Kraftfahrzeug. Das Kraftfahrzeug weist zumindest eine Rechnereinheit 41 auf, die redundante Kopien von Boot-Images unterstützt. Die Rechnereinheit 41 umfasst eine erfindungsgemäße Vorrichtung 20, 30 zum Durchführen eines Bootvorgangs. Zudem weist das Kraftfahrzeug zumindest ein Assistenzsystem 42 auf, das einen Bediener des Kraftfahrzeugs im Fahrbetrieb unterstützt. Weitere Bestandteile des Kraftfahrzeugs sind in diesem Beispiel ein Navigationssystem 43 sowie eine Datenübertragungseinheit 44. Mittels der Datenübertragungseinheit 44 kann eine Verbindung zu einem Backend aufgebaut werden, z.B. um aktualisierte Software für die Rechnereinheit 41 oder andere Komponenten des Kraftfahrzeugs zu beziehen. Zur Speicherung von Daten ist ein Speicher 45 vorhanden. Dieser kann alternativ auch lokal auf die verschiedenen Einheiten 41-44 verteilt vorliegen. Der Datenaustausch zwischen den verschiedenen Komponenten des Kraftfahrzeugs erfolgt über ein Netzwerk 46.

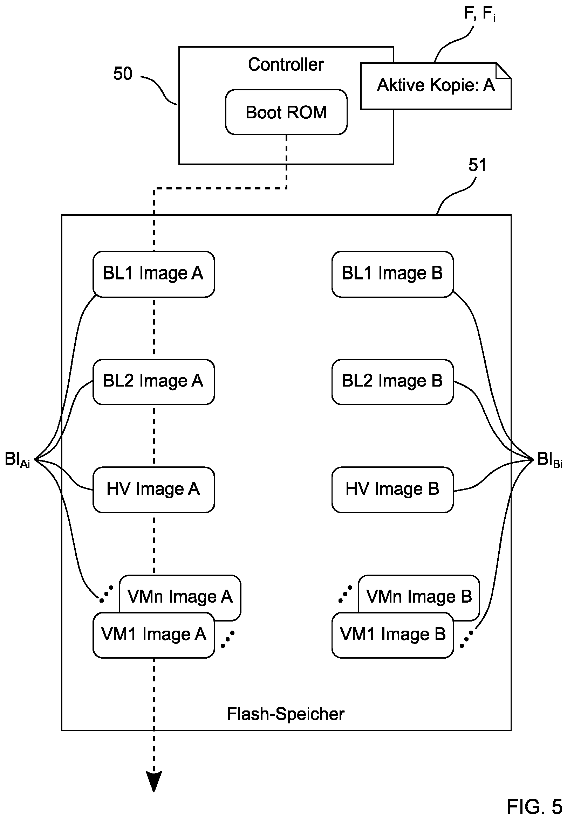

Fig. 5 zeigt schematisch eine mehrstufige Boot-Sequenz gemäß dem Stand der Technik, wenn kein beschädigtes Boot-Image vorliegt. Im dargestellten Beispiel unterstützt das System redundante Kopien von Boot-Images BI_{Ai}, BI_{Bi} für alle Stufen der Boot-Sequenz. Zudem wird ein globales Flag F verwendet, mit dem für alle Stufen die gleiche aktive Kopie (Kopie A oder B) ausgewählt wird. Es können aber auch individuelle Flags Fᵢ für einzelne oder alle Stufen verwendet werden. Die Stufen umfassen in diesem Beispiel zwei Bootloader-Stufen (BL1 und BL2), eine Hypervisor-Stufe (HV) und eine Reihe von Stufen von virtuellen Maschinen (VM1 bis VMn). Für alle Stufen der Boot-Sequenz werden zwei Kopien der Boot-Images BI_{Ai}, BI_{Bi} in einem Flash-Speicher 51 abgelegt. Die aktive Kopie, die für die mehrstufige Boot-Sequenz verwendet werden soll, wird durch das Setzen des globalen Flags F definiert. In Fig. 5 ist Kopie A als aktive Kopie ausgewählt und wird von einem Controller 50 dementsprechend aufgerufen. In jeder Stufe der Boot-Sequenz wird das Boot-Image BI_{Ai}, BI_{Bi} der nächsten Stufe aus dem Flash-Speicher 51 gelesen und, im Falle von Secure Boot, validiert. Daher kann der Boot-Code jeder Stufe eine beschädigte aktive Kopie des Boot-Images BI_{Ai}, BI_{Bi} der nächsten Stufe erkennen, z.B. anhand von Informationen zu Lesefehlern beim Zugriff auf den Flash-Speicher 51 oder anhand einer fehlgeschlagenen Validierung des Boot-Images BI_{Ai}, BI_{Bi}. In Fig. 5 ist keines der Boot-Images BI_{Ai}, BI_{Bi} beschädigt, sodass die Boot-Sequenz ohne Zugriff auf die redundanten Kopien der Boot-Images BI_{Ai}, BI_{Bi} abgearbeitet werden kann.

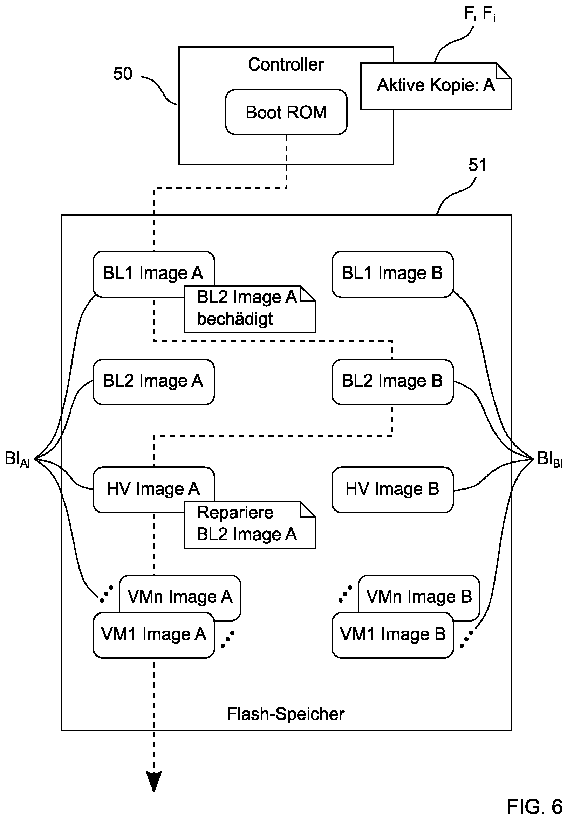

Fig. 6 zeigt schematisch die mehrstufige Boot-Sequenz aus Fig. 5 für den Fall, dass ein beschädigtes Boot-Image BI_{Ai}, BI_{Bi} vorliegt. In dargestellten Beispiel ist die Kopie A des Boot-Images BI_{Ai} der zweiten Bootloader-Stufe beschädigt. Diese Beschädigung wird vom Boot-Code der ersten Bootloader-Stufe erkannt, sodass statt auf Kopie A auf Kopie B des Boot-Images BI_{Bi} der zweiten Bootloader-Stufe zurückgegriffen wird. Für die nachfolgenden Stufen wird dann wieder auf Kopie A zurückgegriffen. Im dargestellten Beispiel führt die Hypervisor-Stufe eine Reparatur des Boot-Images BI_{Ai} der zweiten Bootloader-Stufe durch, indem sie die beschädigte Kopie A des Boot-Images BI_{Ai} durch die intakte Kopie B des Boot-Images BI_{Bi} ersetzt.

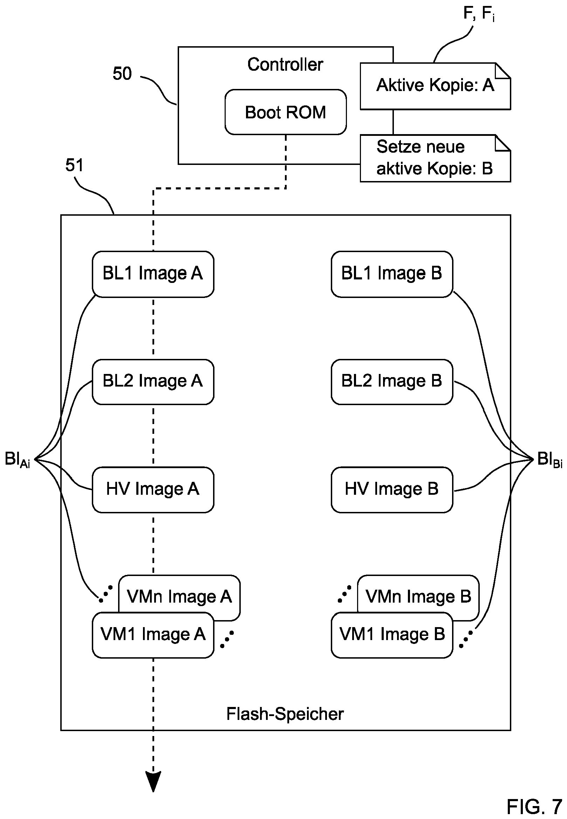

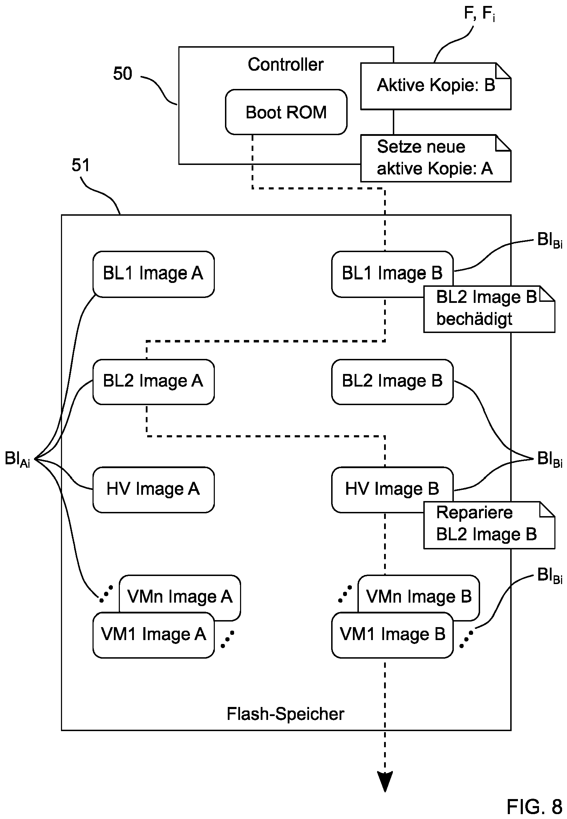

Fig. 7 zeigt schematisch eine mehrstufige Boot-Sequenz gemäß der Erfindung, wenn kein beschädigtes Boot-Image BI_{Ai}, BI_{Bi} vorliegt. Bei der erfindungsgemäßen Lösung wird nach jedem Bootvorgang, oder zumindest nach einer definierten Anzahl von Bootvorgängen, eine andere Kopie eines Boot-Images BI_{Ai}, BI_{Bi} als aktive Kopie für den nächsten Bootvorgang gesetzt. Dazu kann einfach das globale Flag F bzw. können die individuellen Flags Fᵢ neu gesetzt werden. Beim nächsten Bootvorgang wird dann auf die anderen Kopien der Boot-Images BI_{Ai}, BI_{Bi} zurückgegriffen, sodass diese nun überprüft und bei Bedarf repariert werden. Dies ist beispielhaft in Fig. 8 dargestellt.

## Patentansprüche

1. Verfahren zum Durchführen eines Bootvorgangs eines Systems, das redundante Kopien von Boot-Images (BI_{Ai}, BI_{Bi}) unterstützt, mit den Schritten:
- Bestimmen (S1) einer aktiven Kopie der Boot-Images (BI_{Ai}, BI_{Bi});
- Verarbeiten (S2) der aktiven Kopie der Boot-Images (BI_{Ai}, BI_{Bi}); und
- Setzen (S3) einer anderen Kopie der Boot-Images (BI_{Ai}, BI_{Bi}) als aktive Kopie für einen nachfolgenden Bootvorgang im Ansprechen auf einen erfolgreichen Bootvorgang.

2. Verfahren gemäß Anspruch 1, wobei die aktive Kopie der Boot-Images (BI_{Ai}, BI_{Bi}) mittels zumindest eines Flags (F, Fᵢ) angezeigt wird.

3. Verfahren gemäß Anspruch 2, wobei das zumindest eine Flag (F, Fᵢ) in einem Speicher des Systems gespeichert ist oder von einer externen Einheit bereitgestellt wird.

4. Verfahren gemäß Anspruch 2 oder 3, wobei das zumindest eine Flag (F, Fᵢ) für einzelne Stufen einer Boot-Sequenz oder global für die Boot-Sequenz gesetzt ist.

5. Verfahren gemäß einem der vorherigen Ansprüche, wobei im Ansprechen auf das Feststellen einer Beschädigung einer aktiven Kopie eines Boot-Images (BI_{Ai}, BI_{Bi}) eine entsprechende redundante Kopie des betroffenen Boot-Images (BI_{Ai}, BI_{Bi}) verarbeitet wird.

6. Verfahren gemäß Anspruch 5, wobei nach dem Verarbeiten der redundanten Kopie des Boot-Images (BI_{Ai}, BI_{Bi}) die beschädigte aktive Kopie des Boot-Images (BI_{Ai}, BI_{Bi}) repariert wird.

7. Verfahren gemäß einem der vorherigen Ansprüche, wobei nur für einzelne Stufen einer Boot-Sequenz redundante Kopien der Boot-Images (BI_{Ai}, BI_{Bi}) verfügbar sind.

8. Verfahren gemäß einem der vorherigen Ansprüche, wobei das Verfahren im Ansprechen auf einen Aktualisierungsvorgang einer ladbaren Software-Komponente oder einer ladbaren Firmware-Komponente bis zu einem erfolgreichen Abschluss des Aktualisierungsvorgangs ausgesetzt wird.

9. Computerprogramm mit Instruktionen, die bei Ausführung durch einen Computer den Computer zur Ausführung der Schritte eines Verfahrens gemäß einem der Ansprüche 1 bis 8 zum Durchführen eines Bootvorgangs veranlassen.

10. Vorrichtung (20) zum Durchführen eines Bootvorgangs eines Systems, das redundante Kopien von Boot-Images (BI_{Ai}, BI_{Bi}) unterstützt, mit:
- einer Auswerteeinheit (22) zum Bestimmen (S1) einer aktiven Kopie der Boot-Images (BI_{Ai}, BI_{Bi}); und
- einer Verarbeitungseinheit (23) zum Verarbeiten (S2) der aktiven Kopie der Boot-Images (BI_{Ai}, BI_{Bi}) und zum Setzen (S3) einer anderen Kopie der Boot-Images (BI_{Ai}, BI_{Bi}) als aktive Kopie für einen nachfolgenden Bootvorgang im Ansprechen auf einen erfolgreichen Bootvorgang.

## Geänderte Patentansprüche

### Geänderte Patentansprüche gemäss Regel 137(2) EPÜ.

1. Verfahren zum Durchführen eines Bootvorgangs eines Systems, das redundante Kopien von Boot-Images (BI_{Ai}, BI_{Bi}) unterstützt, mit den Schritten:
- Bestimmen (S1) einer aktiven Kopie der Boot-Images (BI_{Ai}, BI_{Bi});
- Verarbeiten (S2) der aktiven Kopie der Boot-Images (BI_{Ai}, BI_{Bi}); und
- Setzen (S3) einer anderen Kopie der Boot-Images (BI_{Ai}, BI_{Bi}) als aktive Kopie für einen nachfolgenden Bootvorgang, **dadurch gekennzeichnet, daß** das Setzen (S3) im Ansprechen auf einen erfolgreichen Bootvorgang erfolgt.

2. Verfahren gemäß Anspruch 1, wobei die aktive Kopie der Boot-Images (BI_{Ai}, BI_{Bi}) mittels zumindest eines Flags (F, Fᵢ) angezeigt wird.

3. Verfahren gemäß Anspruch 2, wobei das zumindest eine Flag (F, Fᵢ) in einem Speicher des Systems gespeichert ist oder von einer externen Einheit bereitgestellt wird.

4. Verfahren gemäß Anspruch 2 oder 3, wobei das zumindest eine Flag (F, Fᵢ) für einzelne Stufen einer Boot-Sequenz oder global für die Boot-Sequenz gesetzt ist.

5. Verfahren gemäß einem der vorherigen Ansprüche, wobei im Ansprechen auf das Feststellen einer Beschädigung einer aktiven Kopie eines Boot-Images (BI_{Ai}, BI_{Bi}) eine entsprechende redundante Kopie des betroffenen Boot-Images (BI_{Ai}, BI_{Bi}) verarbeitet wird.

6. Verfahren gemäß Anspruch 5, wobei nach dem Verarbeiten der redundanten Kopie des Boot-Images (BI_{Ai}, BI_{Bi}) die beschädigte aktive Kopie des Boot-Images (BI_{Ai}, BI_{Bi}) repariert wird.

7. Verfahren gemäß einem der vorherigen Ansprüche, wobei nur für einzelne Stufen einer Boot-Sequenz redundante Kopien der Boot-Images (BI_{Ai}, BI_{Bi}) verfügbar sind.

8. Verfahren gemäß einem der vorherigen Ansprüche, wobei das Verfahren im Ansprechen auf einen Aktualisierungsvorgang einer ladbaren Software-Komponente oder einer ladbaren Firmware-Komponente bis zu einem erfolgreichen Abschluss des Aktualisierungsvorgangs ausgesetzt wird.

9. Computerprogramm mit Instruktionen, die bei Ausführung durch einen Computer den Computer zur Ausführung der Schritte eines Verfahrens gemäß einem der Ansprüche 1 bis 8 zum Durchführen eines Bootvorgangs veranlassen.

10. Vorrichtung (20) zum Durchführen eines Bootvorgangs eines Systems, das redundante Kopien von Boot-Images (BI_{Ai}, BI_{Bi}) unterstützt, mit:
- einer Auswerteeinheit (22) zum Bestimmen (S1) einer aktiven Kopie der Boot-Images (BI_{Ai}, BI_{Bi}); und
- einer Verarbeitungseinheit (23) zum Verarbeiten (S2) der aktiven Kopie der Boot-Images (BI_{Ai}, BI_{Bi}) und zum Setzen (S3) einer anderen Kopie der Boot-Images (BI_{Ai}, BI_{Bi}) als aktive Kopie für einen nachfolgenden Bootvorgang, **dadurch gekennzeichnet, daß** das Setzen (S3) im Ansprechen auf einen erfolgreichen Bootvorgang erfolgt.
